# EUROPEAN PATENT APPLICATION

(11) **EP 4 325 604 A1**
(43) Date of publication of application: **21.02.2024**
(21) Application number: 21941670.8
(22) Date of filing: 16.11.2021
(51) Int. Cl.: H01M 4/62, H01M 4/525, H01M 4/505, H01M 4/04, H01M 4/1391, H01M 10/0525, H01M 10/42

(54) **COBALT-FREE POSITIVE ELECTRODE MATERIAL SLURRY, PREPARATION METHOD THEREFOR AND APPLICATION TECHNICAL FIELD THEREOF**

(30) Priority: 13.05.2021 CN 202110519766
(71) Applicant: SVOLT ENERGY TECHNOLOGY CO., LTD, Changzhou, Jiangsu 213200 (CN)
(72) Inventor: CHANG, Xingqi, hangzhou, Jiangsu 213200 (CN)
(74) Representative: Groth & Co. KB
(86) International application number: PCT/CN2021/130820
(87) International publication number: WO 2022/237106

(57) **Abstract**

Disclosed herein are a cobalt-free positive electrode material slurry, a preparation method therefor and an application thereof. The cobalt-free positive electrode material slurry comprises a cobalt-free positive electrode material, a solvent, a sulfone compound containing unsaturated bonds and an auxiliary agent. When the total parts by weight of the cobalt-free positive electrode material and the auxiliary agent are 100 parts, the parts by weight of the solvent are 25-40 parts, and the parts by weight of the sulfone compound containing the unsaturated bond are 1-7 parts. A positive electrode pole piece formed by the cobalt-free positive electrode material slurry may better isolate air and moisture and protect the cobalt-free positive electrode material of a core component. The lithium ion battery formed thereby has a relatively high first discharge capacity, capacity retention rate and first Coulombic efficiency, and is relatively safe.

## Description

The present disclosure relates to lithium-ion batteries, for example, to cobalt-free positive electrode material slurry and a preparation method therefor and an application thereof.

### BACKGROUND

Lithium-ion batteries have the advantages of high energy density, no memory effect, wide operating temperature, high voltage window, etc., and are widely used in high energy density battery products. How to reduce the production cost of batteries and improve the safety of batteries while improving the energy density of batteries has become an urgent problem to be solved by various battery industries.

CN109755511A discloses a lithium ion battery positive electrode material and a preparation method therefor. The disclosed lithium ion battery positive electrode material comprises a positive electrode active material and an electron-conductive polymer and an ion-conductive polymer coated sequentially on the surface of the positive electrode active material from the inside to the outside. The preparation method disclosed is: the preparation of polyazobenzene sulfone polymer (electron-conductive polymer) containing triphenylamine structure in the main chain; the preparation of oxyxanthone-modified polymer (ion-conductive polymer); coating with electron-conductive polymer; coating with ion-conducting polymer; spray-drying to obtain the lithium ion battery positive electrode material sequentially coated with olymer containing triphenylamine in the main chain and oxyxanthone-modified polymer on the surface of the positive electrode active substance from the inside to the outside; the disclosed lithium ion battery positive electrode material can significantly increase the energy density and power density of the battery, and can improve the cycle performance, rate performance, capacity retention and safety performance of the battery.

CN112038642A discloses a lithium ion battery positive electrode slurry and a preparation method therefor and an application thereof, and the disclosed slurry comprises: a positive electrode active material, a conductive agent, a binder, a metaphosphate and an organic solvent; based on the total mass of the positive electrode active material, the conductive agent, the binder, and the metaphosphate, the content of the metaphosphate is 0.5% to 1.9%. When the metaphosphate is added to the positive electrode slurry, the metaphosphate is directly wrapped on the surface of the positive electrode active material during dispersion, which can not only enhance its electronic conductivity, improve the first Coulombic efficiency and gram capacity of the battery, but also reduce the contact surface area between the positive electrode active material and the electrolyte, reducing the occurrence of side reactions. In addition, the metaphosphate is weakly acidic, and can neutralize the residual alkali on the surface of the positive electrode active material under a certain voltage.

To sum up, it is very important to develop a positive electrode slurry capable of forming a positive electrode plate with less impurity generation and stable performance when forming the electrode plate.

### SUMMARY OF THE INVENTION

Many positive electrode materials contain nickel (Ni) and manganese (Mn) elements. Nickel and manganese elements have the phenomenon of migration, rich in the surface of the material, and are prone to oxidation-reduction reactions with carbonate solvents in the electrolyte under the action of voltage and potential, resulting in gas production and loss of active lithium in the battery; in addition, migrated Ni and Mn elements are likely to cause poor battery performance at high temperatures, commonly known as intensified high-temperature gas generation. At high temperatures, the residual trivalent nickel element on the surface of the material comes into contact with the electrolyte and continuous to catalyze the decomposition of the electrolyte under the action of potential, forming a thick solid-liquid contact film (SEI) on the surface. The thick SEI increases the battery resistance and intensifies the heat generation of the battery, and the self-discharge phenomenon of the battery is aggravated, which seriously affects the storage performance of the battery.

In addition, when the mixture of nickel-manganese oxides on the surface is stored in the air, it is easy to react with moisture and oxygen in the air, exposing active lithium, forming lithium oxide and causing irreversible loss of material capacity. The positive electrode material is easily affected by environmental factors during the storage process. In the presence of moisture and oxygen in the air, it is easy to cause the stripping of lithium and nickel elements in the material, forming impurities of nickel hydroxide and lithium oxide, causing the capacity of the material to decrease. At the same time, when the slurry is baked and rolled at high temperature, the positive electrode material will accelerate the reaction with oxygen and moisture in the air under the influence of temperature to form more impurities; these nickel impurities are easily dissolved by electrolysis and deposited on the surface of the negative electrode during charging and discharging, forming nickel dendrites, which poses a safety risk.

The present disclosure provides a cobalt-free positive electrode material slurry and a preparation method therefor and an application thereof. The positive electrode plate formed by the cobalt-free positive electrode material slurry provided by the present disclosure can better isolate air and moisture, protect the core component of the cobalt-free positive electrode material, reduce the occurrence of side reactions, reduce the generation of impurities in the working process, and have stable performance. The further formed lithium ion battery has high first discharge capacity, capacity retention rate and first Coulombic efficiency, and has high safety.

In one embodiment of the present disclosure, a cobalt-free positive electrode material slurry is provided, the cobalt-free positive electrode material slurry comprises a cobalt-free positive electrode material, a solvent, a sulfone compound containing unsaturated bonds, and an auxiliary agent.

Based on 100 parts by total weight parts of the cobalt-free positive electrode material and auxiliary agent, the parts by weight of the solvent is 25- to 40 parts, such as 26 parts, 28 parts, 30 parts, 32 parts, 34 parts, 36 parts, 38 parts, etc., the parts by weight of sulfone compounds containing the unsaturated bonds is 1 to 7 parts, such as 1.5 parts, 2 parts, 2.5 parts, 3 parts, 3.5 parts, 4 parts, 4.5 parts, 5 parts, 5.5 parts, 6 parts, 6.5 parts, etc.

The cobalt-free positive electrode material slurry comprises a sulfone compound containing unsaturated bonds, and the sulfone compound containing unsaturated bonds acts synergistically with a solvent to increase the viscosity of the cobalt-free positive electrode material on the one hand; on the other hand, the surface of the cobalt-free positive electrode material formed can better isolate air and moisture, and protect the core component positive electrode material. Therefore, the lithium ion battery formed by using the cobalt-free positive electrode material slurry has high first discharge capacity, capacity retention rate, first Coulombic efficiency, and high safety. The parts by weight of the solvent and the sulfone compound containing unsaturated bonds are 25 to 40 parts and 1 to 7 parts respectively, and the solvent and the sulfone compound containing unsaturated bonds play a synergistic effect and cooperate with each other under a specific ratio. The lithium ion battery formed thereby has a relatively high first discharge capacity, capacity retention rate and first Coulombic efficiency, and is relatively safe.

In one embodiment, the parts by weight of the cobalt-free positive electrode material is 90- to 96 parts, such as 91 parts, 92 parts, 93 parts, 94 parts, 95 parts and so on.

In one embodiment, the parts by weight of the auxiliary agent is 4 to 10 parts, such as 5 parts, 6 parts, 7 parts, 8 parts, 9 parts, etc.

In one embodiment, the cobalt-free positive electrode material comprises LiₓNi_{y}Mn_{z}O₂;
wherein the x is 1 to 1.1(such as 1.02, 1.04, 1.06, 1.08, etc.), y is 0.7 to 0.8 (such as 0.72, 0.73, 0.74, 0.75, 0.76, 0.77, 0.78, 0.79, etc.), z is 0.2 to 0.5 (such as , 0.25, 0.3, 0.35, 0.4, 0.45, etc.), and y+z=1.

In one embodiment, the solvent comprises any one or a combination of at least two of N-methylpyrrolidone(NMP), acetone, dimethyl sulfoxide and tetrahydrofuran.

In one embodiment, the solvent is NMP. As a solvent, NMP is cheap, and the performance of the formed positive electrode material slurry is stable.

In one embodiment, the sulfone compound containing unsaturated bonds comprises any one or a combination of at least two of divinyl sulfone (DVS), triethylenyl sulfone and propylene sulfone, wherein typical but not limiting combinations comprise: a combination of divinyl sulfone and trivinyl sulfone, a combination of trivinyl sulfone and propylene sulfone, and a combination of divinyl sulfone, trivinyl sulfone and propylene sulfone, etc.

In one embodiment, the sulfone compound containing unsaturated bonds is DVS. DVS is used in combination with the solvent NMP because DVS has good solubility in NMP and DVS is low in cost.

In one embodiment, the auxiliary agent comprises at least one of a binder and a conductive agent.

In one embodiment, the binder comprises any one or a combination of at least two of polyvinylidene fluoride, polyacrylonitrile and polyacrylic acid, wherein typical but non-limiting combinations comprise: a combination of polyvinylidene fluoride and polyvinylidene, a combination of polyacrylonitrile and polyacrylic acid, and a combination of polyvinylidene fluoride, polyacrylonitrile and polyacrylic acid, etc.

In one embodiment, the conductive agent comprises any one or a combination of at least two of conductive carbon black, carbon nanotubes and graphene, wherein typical but non-limiting combinations comprise: a combination of conductive carbon black and carbon nanotubes, a combination of carbon nanotubes and graphene, and a combination of conductive carbon black, carbon nanotubes and graphene, etc.

In one embodiment of the present disclosure, a method for preparing the above-mentioned cobalt-free positive electrode material slurry is provided. The preparation method comprises the following steps: mixing the cobalt-free positive electrode material, the solvent and the auxiliary agent, and then mixing the obtained mixed material with the sulfone compound containing unsaturated bonds at a temperature below 60°C (for example, 55°C, 50°C, 45°C, 40°C, 35°C, 30°C, 25°C, etc.) to obtain the cobalt-free positive electrode material slurry.

In one embodiment of the present disclosure, when preparing the cobalt-free positive electrode material slurry, the sulfone compound containing unsaturated bonds is added at the end, and mixed at a lower temperature, which is conducive to forming a stable cobalt-free positive electrode material slurry and facilitating the formation of the positive plate.

In one embodiment of the present disclosure, a positive electrode plate is provided, wherein a raw material for preparing the positive electrode plate comprises the above-mentioned cobalt-free positive electrode material slurry.

In one embodiment of the present disclosure, a method for preparing the above-mentioned positive electrode plate is provided. The preparation method comprises the following steps: coating the cobalt-free positive electrode material slurry on a substrate and heating to obtain the positive electrode plate.

The current thick electrodes, especially thick electrodes for cobalt-free batteries, are mainly realized by increasing the coating surface density. In order to ensure the thickness of the electrode plate, thick electrode plate is prepared by means of multiple rolling. However, the electrode plate prepared by this method has a high compaction density, which results in poor performance of the electrolyte wetting the electrode plate and excessive rebound of the electrode. In addition, since cobalt-free is mainly Ni and Mn binary materials, its surface is highly alkaline, has poor conductivity and there are metal residues. These metal residues have the risk of being dissolved into the electrolyte, increasing the self discharge phenomenon of the battery and reducing its safety.

In the present disclosure, heating is carried out during the preparation. During heating, the solvent carries sulfone compounds containing unsaturated bonds to volatilize, part of the sulfone compounds volatilize into the air, and part of the sulfone compounds generate polymerization - crosslinking on the surface of the coating during volatilization. A thin polymer layer is obtained on the surface of the coating, which can better isolate air and moisture, protect the positive electrode material, reduce the formation of impurities, improve the safety of the battery, and the process is simple, improving the performance of the battery without adding any additional processes.

In one embodiment, the heating temperature is 60 °C to 150 °C, such as 65°C, 70°C, 75°C, 80°C, 85°C, 90°C, 95°C, 100°C, 105°C, 110°C, 115°C, 120°C, 125°C, 130°C, 135°C, 140°C, 145°C, etc. At this temperature, the sulfone compound can polymerize and cross-link on the surface of the coating to the greatest extent, and the loss rate is low.

In one embodiment, the heating temperature is 100 °C to 150°C, such as 105°C, 110°C, 115°C, 120°C, 125°C, 130°C, 135°C, 140°C, 145°C, etc.

In one embodiment, the heating time is 30 seconds or more, such as 40 seconds, 50 seconds, 60 seconds, 70 seconds and so on.

In one embodiment, the preparation method comprises the following steps: coating the cobalt-free positive electrode material slurry on a current collector, and heating at 60 °C to 150 °C for more than 30 seconds to obtain the positive electrode plate.

In one embodiment of the present disclosure, a battery is provided, wherein the battery comprises the above-mentioned positive electrode plate.

The positive electrode plate formed by the cobalt-free positive electrode material slurry provided by the present disclosure can better isolate air and moisture, protect the core component of the cobalt-free positive electrode material, reduce the occurrence of side reactions, reduce the generation of impurities in the working process, and have stable performance. The further formed lithium ion battery by the positive electrode plate has high first discharge capacity, capacity retention rate and first Coulombic efficiency, and has high safety. Wherein, when the DVS in the cobalt-free positive electrode material slurry of the present disclosure is in the range of 2-6 parts, the performance of the obtained lithium ion battery is better, the first discharge capacity is above 166mAh/g, the first Coulombic efficiency is above 65%, and the capacity retention rate is above 57%, the first discharge capacity of the lithium ion battery obtained with 2 parts of DVS is 183mAh/g, the first Coulombic efficiency is 81%, and the capacity retention rate after 500 cycles is 80%.

Additional aspects and advantages of the disclosure will be set forth in part in the description which follows, and in part will be obvious from the description, or may be learned by practice of the disclosure.

### BRIEF DESCRIPTION OF THE DRAWINGS

The drawings are used to provide a further understanding of the technical solutions of the present disclosure, and constitute a part of the description, and are used together with the embodiments of the application to explain the technical solutions of the present disclosure, and do not constitute limitations to the technical solutions of the present disclosure.

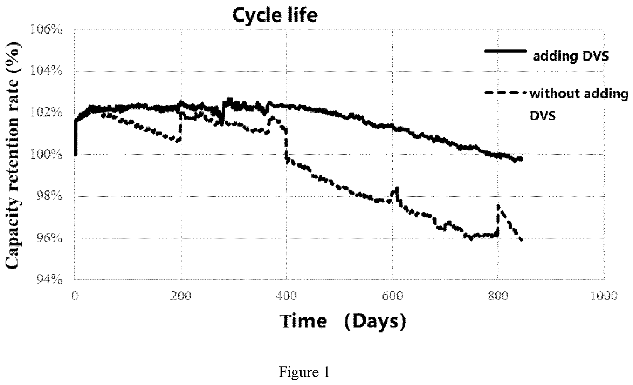

Figure 1 is a graph showing the relationship between the capacity retention rate and time of the lithium-ion batteries formed in the Application Example and the Application Comparative Example.

### DETAILED DESCRIPTION

The technical solutions of the present disclosure will be further described below in conjunction with the drawings and specific implementation methods.

In one aspect of the present disclosure, the present disclosure proposes a cobalt-free positive electrode slurry. According to an embodiment of the present disclosure, the cobalt-free positive electrode slurry comprises a cobalt-free positive electrode material, a solvent, a sulfone compound containing unsaturated bonds, and an auxiliary agent.

Based on 100 parts by total weight parts of the cobalt-free positive electrode material and auxiliary agent, the parts by weight of the solvent is 25 to 40 parts, the parts by weight of sulfone compounds containing the unsaturated bonds is 1 to 7 parts. The cobalt-free positive electrode material slurry comprises a sulfone compound containing unsaturated bonds, and the sulfone compound containing unsaturated bonds acts synergistically with a solvent, and for the first aspect, can increase the viscosity of the cobalt-free positive electrode material; for the second aspect, the surface of the cobalt-free positive electrode material formed can better isolate air and moisture, and protect the core component positive electrode material; for the third aspect, the solvent and the sulfone compound containing unsaturated bonds play a synergistic effect and cooperate with each other under a specific ratio, and the lithium ion battery obtained has high first discharge capacity, capacity retention rate, first Coulombic efficiency, and high safety. Therefore, the lithium ion battery formed by using the cobalt-free positive electrode material slurry has high first discharge capacity, capacity retention rate, first Coulombic efficiency, and high safety.

According to an embodiment of the present disclosure, the parts by weight of the cobalt-free positive electrode material is 90 to 96 parts.

According to an embodiment of the present disclosure, the parts by weight of the auxiliary agent is 4 to 10 parts.

According to an embodiment of the present disclosure, the cobalt-free positive electrode material comprises LiₓNi_{y}Mn_{z}O₂;wherein, x is 1 to 1.1, y is 0.7 to 0.8, z is 0.2 to 0.5, and y+z=1.

According to an embodiment of the present disclosure, the solvent may be any one or a combination of at least two of NMP, acetone, dimethyl sulfoxide and tetrahydrofuran. In one embodiment, the solvent is NMP. As a solvent, NMP is cheap, and the performance of the formed positive electrode material slurry is stable.

According to an embodiment of the present disclosure, the sulfone compound containing unsaturated bonds comprises any one or a combination of at least two of DVS, triethylenyl sulfone and propylene sulfone. In one embodiment, the sulfone compound containing unsaturated bonds is DVS.

According to an embodiment of the present disclosure, DVS is used in combination with NMP, because DVS has good solubility in NMP and the cost of DVS is low.

According to an embodiment of the present disclosure, the specific type of the auxiliary agent is not particularly limited, and those skilled in the art can select according to actual needs. For example, the auxiliary agent can be selected from at least one of a binder and a conductive agent.

According to an embodiment of the present disclosure, the specific type of the binder is not particularly limited, and those skilled in the art can selected according to actual needs. For example, the binder can be selected from any one or a combination of at least two of polyvinylidene fluoride, polyacrylonitrile and polyacrylic acid. In one embodiment, the binder is polyvinylidene fluoride.

According to an embodiment of the present disclosure, the specific type of the conductive agent is not particularly limited, and those skilled in the art can select according to actual needs. For example, the conductive agent can be selected from any one or a combination of at least two of conductive carbon black, carbon nanotubes and grapheme. In one embodiment, the conductive agent is conductive carbon black.

In another aspect of the present disclosure, the present disclosure proposes a method for preparing a cobalt-free positive electrode material slurry. According to an embodiment of the present disclosure, the preparation method comprises the following steps: mixing the cobalt-free positive electrode material, the solvent and the auxiliary agent, and then mixing the obtained mixed material with the sulfone compound containing unsaturated bonds at a temperature below 60°C to obtain the cobalt-free positive electrode material slurry. When preparing the cobalt-free positive electrode material slurry, the sulfone compound containing unsaturated bonds is added at the end, and mixed at a lower temperature, which is conducive to forming a stable cobalt-free positive electrode material slurry and facilitating the formation of the positive plate.

In another aspect of the present disclosure, the present disclosure provides a positive electrode plate, wherein a raw material for preparing the positive electrode plate comprises the above-mentioned cobalt-free positive electrode material slurry.

In another aspect of the present disclosure, the present disclosure proposes a method for preparing the above-mentioned positive electrode plate. The preparation method comprises the following steps: coating the cobalt-free positive electrode material slurry on a substrate and heating to obtain the positive electrode plate.

The current thick electrodes, especially thick electrodes for cobalt-free batteries, are mainly realized by increasing the coating surface density. In order to ensure the thickness of the electrode plate, thick electrode plate is prepared by means of multiple rolling. However, the electrode plate prepared by this method has a high compaction density, which results in poor performance of the electrolyte wetting the electrode plate and excessive rebound of the electrode. In addition, since cobalt-free is mainly Ni and Mn binary materials, its surface is highly alkaline, has poor conductivity and there are metal residues. These metal residues have the risk of being dissolved into the electrolyte, increasing the self discharge phenomenon of the battery and reducing its safety.

According to an embodiment of the present disclosure, heating is carried out during the preparation. During heating, the solvent carries sulfone compounds containing unsaturated bonds to volatilize, part of the sulfone compounds volatilize into the air, and part of the sulfone compounds generate polymerization - crosslinking on the surface of the coating during volatilization. A thin polymer layer is obtained on the surface of the coating, which can better isolate air and moisture, protect the positive electrode material, reduce the formation of impurities, improve the safety of the battery, and the process is simple, improving the performance of the battery without adding any additional processes.

According to an embodiment of the present disclosure, the heating temperature is 60 °C to 150 °C. At this temperature, the sulfone compound can polymerize and cross-link on the surface of the coating to the greatest extent, and the loss rate is low. In one embodiment, the heating temperature may be 100 °C to 150 °C.

According to an embodiment of the present disclosure, the heating time is 30 seconds or more, and in one embodiment, the heating time is 30 seconds. In the present disclosure, heating can meet the requirements in a relatively short time.

According to an embodiment of the present disclosure, the preparation method comprises the following steps: coating the cobalt-free positive electrode material slurry on a current collector, and heating at 60 °C to 150 °C for more than 30 seconds to obtain the positive electrode plate.

The present disclosure will be described below with reference to specific embodiments. It should be noted that these embodiments are only illustrative and do not limit the present disclosure in any way.

### Example 1

This example provides a cobalt-free positive electrode material slurry, which consists of 95 parts by weight of a cobalt-free positive electrode material (LiNi_{0.7}Mn_{0.3}O₂) , 1.5 parts by weight of a binder (polyvinylidene fluoride, purchased from Sinopharm Chemical Reagent Network), 3.5 parts by weight of a conductive agent (conductive carbon black, purchased from Pioneer Technology), 30 parts by weight of a solvent (NMP) and 2 parts by weight of a sulfone compounds (DVS) containing unsaturated bonds.

The preparation method of the above-mentioned cobalt-free positive electrode material slurry comprises the following steps:
mixing the cobalt-free positive electrode material, the solvent and the auxiliary agent, and then mixing the obtained mixed material with the sulfone compound containing unsaturated bonds at 25°C to obtain the cobalt-free positive electrode material slurry.

### Examples 2-5

The difference between Examples 2-5 and Example 1 is that the parts by weight of DVS are respectively 3 parts by weight (Example 2), 4 parts by weight (Example 3), 5 parts by weight (Example 4) and 6 parts by weight (Example 5), other conditions are the same as those in Example 1.

### Example 6

This example provides a cobalt-free positive electrode material slurry, which consists of 95 parts by weight of a cobalt-free positive electrode material (Li_{1.1}Ni_{0.8}Mn_{0.2}O₂), 1 part by weight of a binder (polyacrylic acid, purchased from Sinopharm Chemical Reagent Network), 3 parts by weight of a conductive agent (carbon nanotubes, purchased from Pioneer Technology), 25 parts by weight of a solvent (NMP) and 1 part by weight of a sulfone compound (DVS) containing unsaturated bonds.

The preparation method of the above-mentioned cobalt-free positive electrode material slurry comprises the following steps:
mixing the cobalt-free positive electrode material, the solvent and the auxiliary agent, and then mixing the obtained mixed material with the sulfone compound containing unsaturated bonds at 45°C to obtain the cobalt-free positive electrode material slurry.

### Example 7

This example provides a cobalt-free positive electrode material slurry, which consists of 91 parts by weight of a cobalt-free positive electrode material (LiNi_{0.7}Mn_{0.3}O₂), 7 parts by weight of a binder (polyvinylidene fluoride PVDF, purchased from Sinopharm Chemical Reagent Network), 4 parts by weight of a conductive agent (conductive carbon black, purchased from Pioneer Technology), 40 parts by weight of a solvent (NMP) and 7 parts by weight of a sulfone compounds (DVS) containing unsaturated bonds.

The preparation method of the above-mentioned cobalt-free positive electrode material slurry comprises the following steps:
mixing the cobalt-free positive electrode material, the solvent and the auxiliary agent, and then mixing the obtained mixed material with the sulfone compound containing unsaturated bonds at 50°C to obtain the cobalt-free positive electrode material slurry.

### Example 8

The difference between this Example and Example 1 is that the parts by weight of DVS are 0.5 parts by weight, and other conditions are the same as those in Example 1.

### Example 9

The difference between this Example and Example 1 is that the parts by weight of DVS are 8 parts by weight, and other conditions are the same as those in Example 1.

### Example 10

The difference between this Example and Example 1 is that the parts by weight of NMP are 50 parts by weight, and other conditions are the same as those in Example 1.

### Example 11

The difference between this Example and Example 1 is that the parts by weight of NMP are 20 parts by weight, and other conditions are the same as those in Example 1.

### Comparative example 1

The difference between this Comparative example and Example 1 is that DVS is not added, and other conditions are the same as Example 1.

### Application Example 1

This Application Example provides a positive electrode plate. The raw material for preparing the positive electrode plate comprises the cobalt-free positive electrode material slurry described in Example 1.

The preparation method of the above-mentioned positive plate comprises the following steps:
coating the cobalt-free positive electrode material slurry on a substrate (aluminum foil, purchased from Aluminum Corporation of China), and heating at 100° C for 30 seconds to obtain the positive electrode plate.

### Application Examples 2-11

The difference between Application Examples 2-11 and Application Example 1 is that the cobalt-free positive electrode material slurries are respectively the cobalt-free positive electrode material slurries described in Example 2-11, and other conditions are the same as those in Application Example 1.

### Application Examples 12-15

The difference between Application Examples 12-15 and Application Example 1 is that the heating temperatures are 60 °C (Application Example 12), 150 °C (Application Example 13), 40 °C (Application Example 14) and 160 °C (Application Example 15), and other conditions are same as Application Example 1.

### Application Example 16

The difference between this Application Example and Application Example 1 is that the heating time is 20 seconds, and other conditions are the same as Application Example 1.

### Application Comparative example 1

The difference between this application Comparative example and Application Example 1 is that the cobalt-free positive electrode material slurry is the cobalt-free positive electrode material slurry described in Comparative example 1, and other conditions are the same as Application Example 1.

### Performance Testing

A button battery, metal lithium plate, separator, positive electrode plate described in Application Examples 1-16 or Application Comparative example 1 were used to assemble in sequence (the separator separates the positive electrode and lithium plate), and then a mixture of ethylene carbonate and methyl ethyl carbonate of 1M lithium iron phosphate as electrolyte was added, sealed, and assembled into a lithium ion battery.

The assembled lithium ion battery was tested for electrical performance on an electrochemical test cabinet. The specific process was as follows: charge at 25 °C to 4.3V at 0.3C, let it stand for 2 minutes, then charge at 0.2C to 4.3V, let it stand for 2 minutes, then charge at 0.1C to 4.3V, let it stand for 2 minutes, then charge at 0.05C to 4.3V, let it stand for 5 minutes, discharge at 0.3C to 2.8V, and repeat the above steps in a cycle. The test items comprise the first discharge capacity, the first Coulombic efficiency and the capacity retention rate after 500 cycles.

The test results are shown in Figure 1, and the test data are summarized in Table 1.

**Table 1**

| | First discharge capacity (mAh/g) | First Coulombic efficiency (%) | Capacity retention rate (%) |
|---|---|---|---|
| Application Example 1 | 183 | 81 | 80 |
| Application Example 2 | 176 | 76 | 71 |
| Application Example 3 | 174 | 76 | 62 |
| Application Example 4 | 170 | 71 | 58 |
| Application Example 5 | 166 | 65 | 57 |
| Application Example 6 | 165 | 61 | 61 |
| Application Example 7 | 160 | 54 | 53 |
| Application Example 8 | 171 | 64 | 64 |
| Application Example 9 | 162 | 57 | 56 |
| Application Example 10 | 168 | 58 | 54 |
| Application Example 11 | 174 | 61 | 61 |
| Application Example 12 | 171 | 61 | 61 |
| Application Example 13 | 168 | 67 | 58 |
| Application Example 14 | 156 | 45 | 57 |
| Application Example 15 | 162 | 45 | 56 |
| Application Example 16 | 165 | 44 | 50 |
| Application Comparative example 1 | 164 | 56 | 44 |

Analysis of the data in Table 1 shows that in Examples 1-5, the DVS is in the range of 2-6 parts, the first discharge capacity of the obtained lithium ion battery is 166mAh/g or more, the first Coulombic efficiency is 65% or more, and the capacity retention rate is 57% or more. The first discharge capacity of the lithium ion battery obtained by adding 2 parts of DVS in Example 1 is 183mAh/g, the first Coulombic efficiency is 81%, and the capacity retention rate after 500 cycles is 80%. The lithium ion battery formed by the cobalt-free positive electrode material slurry described in the present disclosure has better first discharge capacity, first Coulombic efficiency and capacity retention rate.

Analysis of Application Comparative example 1 and Application Example 1 shows that the performance of Application Comparative example 1 is not as good as that of Application Example 1. In Table 1, the capacity retention rate without DVS is significantly lower than that with DVS, and the relationship between capacity retention and time is shown in Figure 1, which proves that the performance of the lithium ion battery formed without adding sulfone compounds containing unsaturated bonds to the cobalt-free positive electrode material slurry is poor.

Analysis of Application Examples 8-11 and Application Example 1 shows that Application Examples 8-11 are not as good as Application Example 1, which proves that the performance of lithium ion batteries formed by a cobalt-free cathode material slurry under the ratio of a solvent of 25 to 40 parts by weight and a sulfone compound containing unsaturated bonds of 1 to 7 parts by weight is better.

Analysis of Application Examples 12-15 shows that the performance of Application Examples 14-15 is not as good as that of Application Examples 12-13, which proves that when preparing positive electrode plate, the performance of the positive electrode plate formed within the heating temperature range of 60 °C to 150 °C is better, which is beneficial to improving the comprehensive performance of lithium ion batteries.

Analysis of Application Example 16 and Application Example 1 shows that the performance of Application Example 16 is not as good as that of Application Example 1, which proves that when preparing the positive electrode plate, the performance of the positive electrode plate formed when the heating time is 30 seconds or more is better, which is beneficial to improving the comprehensive performance of lithium ion batteries.

## Claims

1. A cobalt-free positive electrode material slurry, wherein the cobalt-free positive electrode material slurry comprises a cobalt-free positive electrode material, a solvent, a sulfone compound containing unsaturated bonds, and an auxiliary agent; and
based on 100 parts by total weight parts of the cobalt-free positive electrode material and auxiliary agent, the parts by weight of the solvent is in a range from 25 parts to 40 parts, and the parts by weight of the sulfone compound containing the unsaturated bond is in a range from 1 parts to 7 parts.

2. The cobalt-free positive electrode material slurry of claim 1, wherein the cobalt-free positive electrode material comprises LiₓNi_{y}Mn_{z}O₂;
wherein the x is in a range from 1 to 1.1, y is in a range from 0.7 to 0.8, z is in a range from 0.2 to 0.5, and y+z=1.

3. The cobalt-free positive electrode material slurry of claim 1 or 2, wherein the solvent comprises any one or a combination of at least two of N-methylpyrrolidone, acetone, dimethyl sulfoxide and tetrahydrofuran.

4. The cobalt-free positive electrode material slurry of any one of claims 1-3, wherein the sulfone compound containing unsaturated bonds comprises any one or a combination of at least two of divinyl sulfone, triethylenyl sulfone and propylene sulfone.

5. The cobalt-free positive electrode material slurry of any one of claims 1-4, wherein the auxiliary agent comprises at least one of a binder and a conductive agent.

6. A method for preparing the cobalt-free positive electrode material slurry of any one of claims 1-5, the method comprises the following steps: mixing the cobalt-free positive electrode material, the solvent and the auxiliary agent, and then mixing the obtained mixed material with the sulfone compound containing unsaturated bonds at a temperature below 60 °C to obtain the cobalt-free positive electrode material slurry.

7. A positive electrode plate, wherein a raw material for preparing the positive electrode plate comprises the cobalt-free positive electrode material slurry of any one of claims 1-5.

8. A method for preparing the positive electrode plate of claim 7, the method comprising the following steps: coating the cobalt-free positive electrode material slurry on a substrate and heating to obtain the positive electrode plate.

9. The method for preparing a positive electrode plate of claim 8, wherein the heating temperature is in a range from 60 °C to 150 °C, and the heating time is 30 seconds or more.

10. A battery comprises the positive electrode plate of claim 7.
